# EUROPEAN PATENT SPECIFICATION

(11) **EP 2 081 185 B1**
(45) Date of publication and mention of the grant of the patent: **26.11.2014**
(21) Application number: 08000772.7
(22) Date of filing: 16.01.2008
(51) Int. Cl.: G10L 15/19, G10L 15/08, G10L 15/04

(54) **Speech recognition on large lists using fragments**
Spracherkennung von langen Listen mithilfe von Fragmenten
Reconnaissance vocale sur des grandes listes à l'aide de fragments

(43) Date of publication of application: 22.07.2009
(73) Proprietor: Nuance Communications, Inc., Burlington, MA 01803 (US)
(72) Inventor: Schwarz, Markus, 89075 Ulm (DE)
(74) Representative: Bertsch, Florian Oliver

(56) References cited:
- WO-A-2004/077405
- SHAFRAN I ET AL: "Use of higher level linguistic structure in acoustic modeling for speech recognition" ACOUSTICS, SPEECH, AND SIGNAL PROCESSING, 2000. ICASSP '00. PROCEEDING S. 2000 IEEE INTERNATIONAL CONFERENCE ON 5-9 JUNE 2000, PISCATAWAY, NJ, USA,IEEE, vol. 2, 5 June 2000 (2000-06-05), pages 1021-1024, XP010504899 ISBN: 978-0-7803-6293-2
- ZHIHONG HU ET AL: "Speech recognition using syllable-like units" SPOKEN LANGUAGE, 1996. ICSLP 96. PROCEEDINGS., FOURTH INTERNATIONAL CO NFERENCE ON PHILADELPHIA, PA, USA 3-6 OCT. 1996, NEW YORK, NY, USA,IEEE, US, vol. 2, 3 October 1996 (1996-10-03), pages 1117-1120, XP010237819 ISBN: 978-0-7803-3555-4

## Description

This invention relates to a speech recognition method for selecting, via a speech input, an entry from a list of entries and to a speech recognition system.

### Related art

In many applications, such as navigation, name dialling or audio/video player control it is necessary to select an entry from a large list of entries such as city names, street names, proper names, addresses or music titles etc. In order to enable speech recognition with moderate memory in processor resources a two-step speech recognition approach is frequently used. In a first step, a phoneme sequence or string is recognised by a speech recognition module. However, the recognition accuracy for phoneme recognition is usually not acceptable and many substitutions, insertions and deletions of phonemes occur. The recognised speech input such as the phoneme string is then compared with a possibly large list of phonetically transcribed entries to determine a shorter candidate list of best matching items. The candidate list can then be supplied to a speech recogniser as a new vocabulary for a second recognition path. Such an approach saves computational resources since the recognition performed in the first step is less demanding and the computational expensive second step is only performed with a small subset of the large list of entries. A two-step speech recognition approach as discussed above is known from WO 2004/077405 A1.

However, in case of very large lists, the computational effort is still quite large. In case of a navigation system with a speech-driven control of the navigation system the situation occurs that the driver/speaker utters a combination of the destination such as a city combined with a street in the city of destination. For example, there exist about three million city-street combinations in Germany. When the recognition step is to be carried out on such a large list, a matching step as mentioned above would require too much memory and matching run time that it cannot be incorporated on an embedded system in a vehicle. These large lists may also exist in other fields of application such as when selecting the name of an artist, song of an artist, e.g. when a voice controlled selection of a song should be incorporated into a product.

### Summary of the invention

Accordingly, a need exists to improve a speech recognition method for selecting an entry from a list of entries in which the computational effort is further minimized.

This need is met by the features of the independent claims. In the dependent claims preferred embodiments of the invention are described.

According to a first aspect of the invention a speech recognition method as claimed in claim 1 is provided for selecting, via a speech input, an entry from a list of entries. The method comprises the steps of detecting and recognizing a speech input. Furthermore, fragments of the list entries are provided. The recognised speech input is then used in order to compare it to the list of entries in order to generate a candidate list of best matching entries based on the comparison result. According to one aspect of the invention, the candidate list is generated by comparing the recognised speech input to said fragments of the list entries. By using the fragments of the list entries for the comparison step instead of the complete list entry, the computational effort can be minimized compared to a matching process with the recognised speech input is being matched to the complete list entry. In case of a large list, each fragment may repeatedly be used in a list entry, e.g. in the case of a destination the fragment **street* or **strasse* may be present in many list entries. Furthermore in case of a city street combination for the list entry, the city name may exist for every street of said city. As a consequence, the list of fragments may become much shorter than the original list. Furthermore, the fragments themselves are also shorter than the corresponding list entries. Those aspects together lead to a significant increase in runtime performance.

According to a preferred embodiment at least one fragment is provided for each entry of the list. Furthermore it is possible to add at least one wildcard to each fragment. Due to the fragmentation the fragment represents only part of the list entry. The wildcard then represents the part of the list entry that was not considered when the fragment of the list entry was generated. Preferably the wildcard matches uniformly against everything else. This implicates that the fragment itself would match precisely against the part of the speech input associated with it and everything else (of the speech input) matches against the wildcard(s). Even when the influence of the wildcard during the matching step cannot be completely avoided, its influence should be minimized. The weight of the wildcard may be determined by calculation or empirical testing.

When the fragmentation of the list entries is carried out, it is preferable that the list of fragments contains substantially all different fragments of the list entries. For the generation of the candidate list of best matching entries the recognised speech input is compared to the list of fragments containing all different fragments. This complete list of fragments can be shorter than the complete list of entries. When said complete list of fragments is used for the matching step, computational effort can be minimized, as the recognised speech input has to be compared to a shorter list as many fragments may be present in many different list entries.

In an additional step of the matching process it is then possible to calculate a score for each fragment the score being a measure how well the recognised speech input fits to a fragment when the recognised speech input is compared to said fragment. On the basis of the score it is then possible to select the best matching entries of the list. In order to do so, a score may be calculated for each fragment of the list of fragments and a list entry score can be calculated for the list entries by adding the scores of the fragments that build a list entry. Even when the calculation of two different scores is necessary, the simple adding of scores in order to arrive at a list entry score is, in computational view, much cheaper than the matching of the recognised speech input to the complete list entry.

The fragments may be accompanied by one or several wildcards, and the one or several wildcards may be provided on one, both or even on no side. When no wildcard is present, this means that the list entry may be very short so that it could not be further fragmented. It is additionally possible to use different wildcards on the different sides of the fragment, e.g. a first wildcard having a first weight on the first side and a second wildcard having a second weight on the second side of the fragment. Furthermore it is possible not to provide wildcards on both sides of the fragment, but to provide a wildcard only on one side of the fragment. This helps to better model the location of the fragment where it appears in the speech input. If it is determined that the wildcard is only provided on the one side, the side on which no wildcard is provided can also be determined. Then the corresponding side of the recognised speech input can be determined and the matching of the recognised speech input to the fragment can be carried out based on a part of the recognised speech input provided on said side of the recognised speech input. For example the fragment **strasse*, * representing the wildcard will be matched usually against the right most part of the utterance in case of a city street list entry. Another advantage of fragments with only one wildcard is that the matching of the fragments versus the utterance does not in effect require the whole utterance to be recognised, but only the appropriate side. When only one side of the recognised speech input/utterance is to be considered for matching, the matching process can also be further accelerated. Such border fragments with only one wildcard also help to model the list entries more accurately which can improve recognition rate considerably.

Additionally, it is possible that the entries in the list of entries also comprise wildcards. These wildcards help to model the fact that the user not only utters the name of the list entry, but that the list entry is embedded in a complete sentence (e.g. "please guide to Lindenstraße in Munich").

The feature of matching only the right or left side of the recognised speech input can also be accomplished by matching from one side in combination with an appropriate pruning mechanism. In a speech recognition method the recognised speech input is compared to phonetical representation of the list entries. One example of such a matching algorithm is the Levenshteinalgorithm which calculates the least number of edit operations that are necessary to modify one string in order to contain another string. During such an operation it can be detected that the number of modifications or edit operations is already very high for a predetermined fragment compared to other fragments that it is not necessary to continue the calculation. This mechanism is known under the expression "pruning" in speech recognition. Such a pruning mechanism can then be applied to the other side of the recognized speech input for which the wild card is present at the fragment.

The advantage of the pruning mechanism relative to a matching algorithm in which one side of the fragment is matched to only one part of the recognized speech output is that one does not need an a priori guess for the cut-off point in the utterance. The disadvantage is that a combination of left to right and right to left matching to increase performance is not or not so easy possible as otherwise. The fragmentation does not have to be one to one in a sense that a concatenation in the right order of the fragments does not necessarily have to give the originating list entry. It is possible that the fragments of the list entries are selected in such a way that the fragments for one list entry overlap. Furthermore it is possible that fragments of the list entries are selected in such a way that they cover only a part of the list entry (so-called underlap). Furthermore a combination of both is possible meaning that some fragments may be overlapping fragments whereas other fragments of the same list entry do not cover the complete list entry. Furthermore the overlapping may be complete in such a way that all parts of the list entry are covered by exactly two fragments, however, it is also possible to use as incomplete overlapping in which some fragments overlap for one or two forenames or subunits.

When the scores of the different fragments are edited in order to calculate the resulting score for a list entry it may be advisable to calculate a normalised score, normalised scores being added for calculating the score of the list entries. This normalisation may be necessary in order to be able to compare the different scores relative to each other. One possibility to carry out a normalisation is to calculate a neutral score that can be determined by matching a single wildcard symbol versus the recognition result. This neutral score can then be subtracted from all scores calculated for the different fragments. Furthermore it is possible to normalise the fragment scores in such a way that a zero becomes a neutral score and then to add the scores of fragments belonging to a complete list entry. So the score of each list entry would be obtained by adding the normalized scores of the fragments of said list entry. For the calculation of the list entry scores it is also possible to explicitely consider number and size of the fragments. Another possibility for a normalisation is the determination of a fragment specific neutral score for every fragment. This is possible when a large number of speech recognition steps for different speech inputs has been carried out and when based on the recognition result for the different speech inputs for a fragment, a fragment specific score can be calculated being the mean score for the different speech inputs. The fragment specific or expected score is the stochastic expected value for the score of a specific fragment and can be used in order to model the difference between the expected score versus the observed score.

In one embodiment of the invention the score does not depend on the position of the fragment in the list entry. However, it is also possible to use, instead of a single score per fragment, a position based score for the fragments. In such a position based score is used the score for "*linden-furt*" is different from the score "*furt-linden*" or the score for "*linden-strasse*" is different from the score for "*strasse-linden*".

For an optimised processing of the fragments and of the respective score it is possible to provide the fragments in a tree like structure. This tree-like structure can be used for adding the scores of the different fragments in order to calculate the score of a list entry. This can be seen in the following example. When the list contains the entries, *Lindenfurt* and *Lindendorf* the score for *Lindenfurt* corresponds to the score for the fragment *Lin* plus the score for the fragment *den* plus the score for the fragment *furt* corresponding to the score of *Linden* and the score of *furt*. For the calculation of the score of *Lindendorf* and *Lindenfurt* the score for *Linden* was already calculated so that one adding step can be avoided when a tree-like structure is used.

The fragment based matching can be used in combination with the two-step recognition step mentioned in the introductory part of the application. This means that the candidate list of best matching entries determined on the basis of the fragments of the list entries can then be used as a basis for an additional recognition step. In this second step the most likely entries in the list are determined by matching phonetic or acoustic representations of the entries listed in the candidate list to the acoustic input. The candidate list can be generated by sorting the list entries in dependence on the calculated score, the n best list entries having the n best scores building the candidate list.

In addition to the matchings that are based on the fragments it is possible to additionally match the recognised speech input to some of the complete list entries in order to generate the candidate list. For example when a good score has been calculated for a fragment it might be advantageous to additionally match the list entries containing said fragment to the recognised speech input before the candidate list of best matching entries is generated. In this case a complete matching is only carried out on some of the entries of the list, but not all entries of the list such that the computational effort is lower than it would be the case if the recognised speech input were compared to the complete number of entries of the list.

A possible embodiment of the two-step matching may be as follows: In a first step a recognition step of the speech input is carried out using an open phoneme loop. Then the recognized speech input is matched to the list entries using the list of fragments. As a third step a complete match step can be carried out in which the recognized speech input is compared to the complete list entries. This step may further shorten the list of the possible matching results. In a fourth step the actual speech recognition can be carried out.

In one embodiment of the invention the fragmentation of the list entries into fragments may be based on a subunit level e.g. the phoneme level. When the list entry comprises a combination of a city name and a street name, it may be advantageous to fragment at least between city and street. However, it should be understood that the city name and the street names can be further fragmented. The fragmentation can also help to reduce the memory requirements for storing the data.

The invention furthermore relates to a speech recognition system as claimed in claim 27 for selecting via a speech input an entry from a list of entries comprising a data base comprising a list of entries and a list of fragments, each fragment represented at least a part of a list entry as explained above. A speech recognition module recognizes the speech input and compares the recognized speech input to the list of entries for generating the candidate list of best matching entries based on the comparison result. According to one aspect of the invention, the speech recognition module compares the recognised speech to the list of fragments in order to generate the candidate list. The speech recognition system may function as explained in detail further above.

The invention furthermore relates to a computer program product as claimed in claim 29 comprising instructions that when it is executed by a processor of a computer system, it performs the method as explained in more detail above.

### Brief description of the drawings

These and other potential objects, features and advantages of the invention will appear more fully from the following description and examples for embodiments of the invention. It is to be understood, however, that the scope of the present invention is not limited by any embodiment shown in the drawings, in which
Fig. 1 shows schematically a speech recognition system using a fragment based approach,
Fig. 2 shows a flow chart with the main steps of a fragment based recognition approach,
Fig. 3 illustrates another flow chart comprising a detailed view of some steps of the fragment based approach for speech recognition, and
Fig. 4 shows an example for the tree-like structure of the fragments.

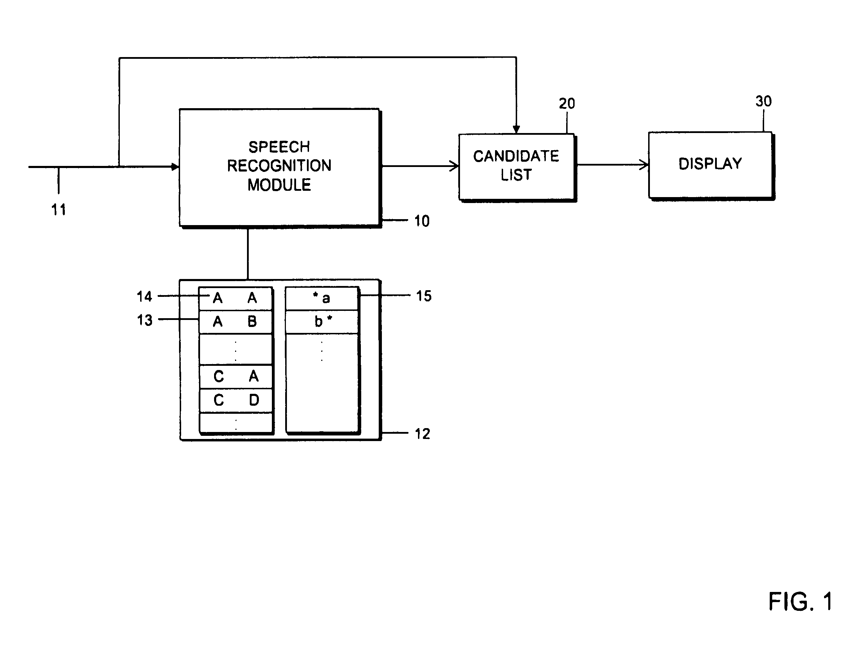

In Fig. 1, a speech recognition system is shown using the fragment based approach for selecting an entry from a large list of entries. The system shown in Fig. 1 can be used for a speech driven selection of a destination location of a vehicle, for the selection of a media file of a media data base, to select personal names in an address book etc. The system can be used in a vehicle environment, however the system shown can also be a stand alone unit used in a non-vehicle environment. The speech recognition system comprises a speech recognition module 10 receiving a speech input from a user 11. The speech recognition module 10 is used in connection with a data base 12 comprising a list of entries 13. The list of entries can comprise city street combinations for a predetermined geographical region such as a country or even several countries. In the embodiment shown the list 13 comprises different entries 14. In the embodiment shown the list entry 14 is a combination of a city A and an address such as a street B. For example the list entry may be as follows: *Frankfurt Lindenstrasse* or *Ulm Olgastrasse München Wettersteinplatz* etc. In addition to the original list of entries a second list 15 may be provided, the list 15 comprising different fragments from the list entries 14 of list 13. Preferably the fragments are provided in the list 15 for all list entries. The list entries are fragmented because for sufficiently large lists matching the fragments is signifantly cheaper in turns of runtime than matching the complete list entries. The fragmentation can be carried out on a phoneme or some other sub word level. The fragmentation decisions where to fragment which list entries may be based upon expected recognition rate, memory requirement and runtime performance. In the embodiment shown in case of a city street combination it may be advantageous to fragment at least between city and street in most cases to reduce memory requirements for storing the data. For the above example the fragmentation could be as follows:
Frankfurt Lindenstrasse => Frank |furt|Linden|strasse
Ulm Olgastrasse => Ulm||Olga|strasse
München Wettersteinplatz => Mün|chen|Wetter|stein|platz
Hamburg Steinstrasse => Ham|burg|Stein|strasse

In the list, the entries are normally stored as phonetically transcribed entries in order to compare them to the recognised phonetic string of the speech input 11. For easy illustration the orthographies of the list entries are shown. As can be seen from the above-mentioned examples the previously disjoint list entries now have the common fragment "strasse" and "stein". The larger the list the greater is this effect. As a result, the list of unique or different fragments may become shorter than the original list. Furthermore, the fragments themselves are also shorter than the complete list entries. These both aspects help to optimise and accelerate the recognition of speech for the selection of an entry in large lists. As can be seen in the Figure, the fragments in the list 15 are accompanied by a wildcard represented by the sign *. In the list the fragment *a* has a wildcard on the left side, whereas the other fragment *b* has a wildcard on the right side. Furthermore, wildcards can also be provided on both sides. For very short list entries, it may arrive that the fragment corresponds to the list entry, so that no wildcard is provided. In the example mentioned above fragments may be provided like *strasse or *olga* etc. The wildcards used do not necessarily have to have the same attributes. For example one can use a different wildcard symbol on the left and on the right side like *olga$ representing a different weighing of the two wildcards.

When the speech recognition module 10 has carried out a first recognition step for recognising the speech input, e.g. using an open phoneme loop or some other subword unit, the recognised speech input is compared to the list of fragments 15 in order to determine the best matching fragments. On the basis of the fragment matching the candidate list of best matching list entries is then calculated. This list of best matching list entries corresponds to the candidate list 20. This short candidate list could be a list where the M best matching entries are shown to the user for further selection. However, this candidate list can also be used in connection with a two-step speech recognition method where another recognition step is carried out on the short list. In this additional recognition step the most likely entry in the list for the same speech input is determined by matching phonetic acoustic representations of the entries listed in the candidate list to the acoustic input and determining the best matching entry or entries. The second step requires much more computing power than the first step. In order to reduce computing time, the number of list entries in list 20 is greatly reduced compared to the number of list entries of list 13. For example the large list 13 of list entries may comprise several hundred thousands or millions of list entries. The second candidate list 20 of best matching entries can be much shorter and may have for example several hundreds or thousands entries. A second recognition step can then be carried out on such a short candidate list 20. The best matching results of this second step can then be shown on a display 30. It should be understood that the second matching step is not absolutely necessary. It is also possible that only one matching step is carried out.

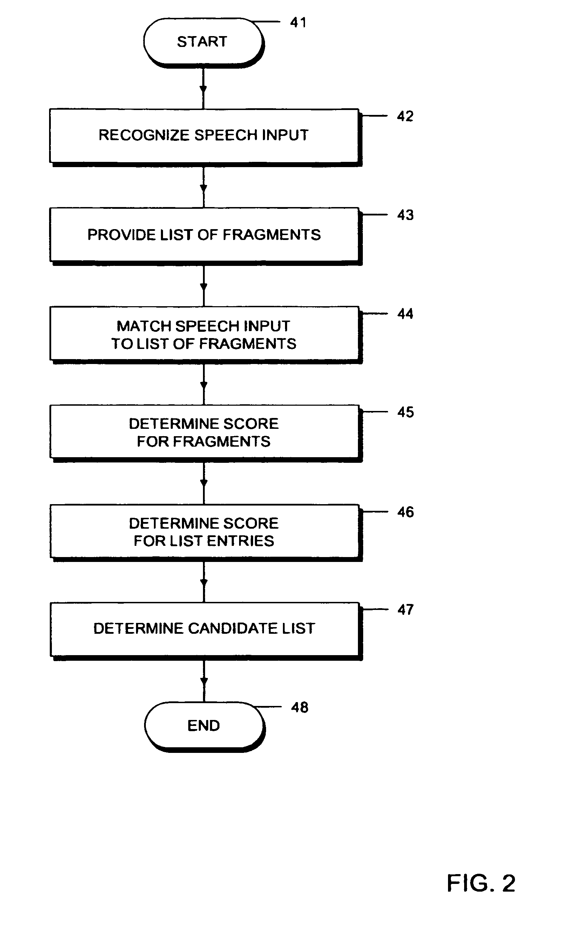

A flow chart showing the main steps of the speech recognition method is shown in Fig. 2. The method starts in step 41. In a step 42, the speech input 11 is recognised. Here, a phoneme sequence or string is recognised by the speech recognition module. Once the phoneme sequence of the speech input is generated the list of fragments 15 has to be provided (step 43). The list of fragments may either be a predetermined list already stored in the system. In case of varying list entries it is also possible that the list of fragments is generated before the matching step is carried out. The matching of the recognised phoneme string to the list of fragments is carried out in step 44. In order to determine how well the recognised phoneme string corresponds to the matched fragment, a score can be determined for each fragment of the list 15 (step 45). When the score for the different fragments is known it is possible to determine the score for the list entries in step 46. It is known by which fragments the complete list entry is concatenated. Accordingly the scores of the different fragments building the list entry have to be simply added in order to determine the score for the list entry. Depending on the score the candidate list of best matching entries can be determined in list 47. The candidate list can then be used for an additional matching step or the best matching entries are shown to the user for further selection or confirmation. However, this second step is known from the prior art and not explained in detail further. In the embodiment shown the method ends in step 48.

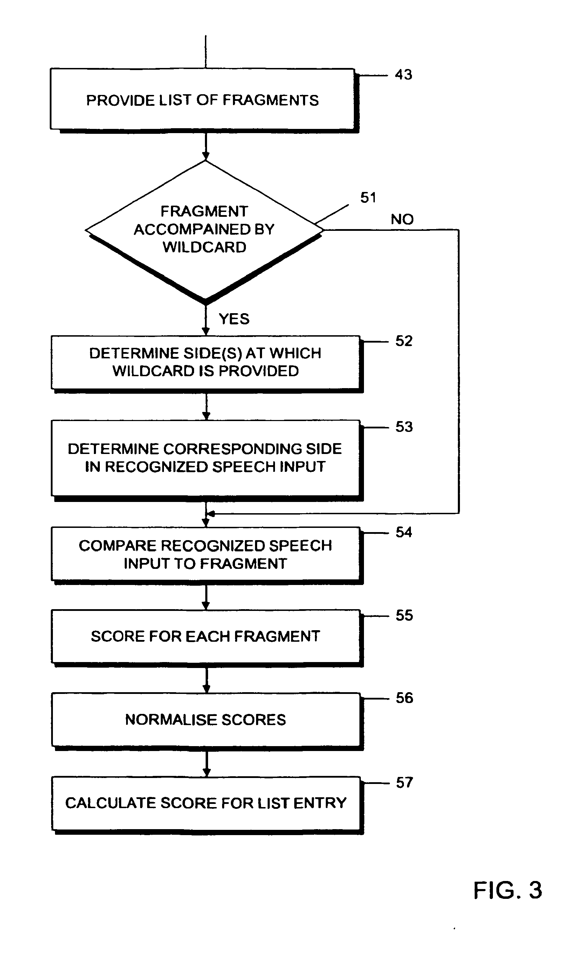

In Fig. 3 the method is shown in further detail. After the fragments were provided in step 43 as explained in connection with Fig. 2 it is asked in step 51 whether a fragment is accompanied by a wild card or not. If this is the case the side on which the wildcard may be determined in step 52. In case the fragment is a border fragment, it can be advantageous not to provide a wildcard on both sides of every fragment in order to better model the location of the fragment and to model where it can appear in an utterance. For example the fragment "*strasse" can be matched usually against the right most part of the utterance. In case of list entries containing a city-street pair. Accordingly, in step 53 the corresponding side in the original speech input is determined. As a consequence when a combination of *fragment is provided, the left part of the corresponding recognised speech input will be less considered or not considered at all, whereas when the combination is fragment* only the first part, meaning the left part of the recognised speech input will be used for the matching. Additionally it is possible to use different variants for the same fragment like *strasse and strasse* if there are for example list entries like strassenhausen and olgastrasse. This may lead to a better scoring. When only one side of the recognised speech input is considered, the matching process becomes much faster. This matching only the right and left part of utterance can be accomplished by a matching from the right side in combination with an appropriate pruning mechanism. This has the advantage that one does not need an a priori guess for the cut-off point in the utterance. The disadvantage is that the combination of left to right and right to left matching is not or not so easily possible as otherwise. If no wildcard is detected in the fragment, the method directly compares the recognised speech input to the fragment (step 54).

According to one aspect of the invention, the fragmentation does not have to be carried out in such a way that a concatenation of the fragments in the right order does necessarily have to give the originating list entry. The fragments may overlap or they may only cover a part of the list entry. Nevertheless it is possible to carry out a matching step with overlapping fragments. The overlapping can even improve the matching accuracy. For the comparison step in step 54 a context sensitive Levenshtein distance or some other suitable matching algorithm can be used. As it is known to the skilled person, the Levenshtein algorithm calculates the least number of edit operations necessary to modify one string to another string. The most common way of calculating this is by a dynamic programming approach using a matrix. In the matrix the edit operations can be seen that are necessary to change the first string to the second string. In case of a weighted algorithm, the costs for changing one character to the other may not be constant. In the present example, the costs were made dependent on the context. However, it should be understood that any other matchintg algorithm might be used. When the recognised speech input is matched to the fragments, a score for each fragment is obtained. For a better comparison of the different scores, the scores might be normalised, e.g. so that zero becomes the neutral score. The scores of all fragments belonging to a complete list entry can then be added. For calculating the list entry scores it is also possible to explicitly consider number and size of the fragments. In one embodiment, a neutral score might be calculated by matching a single wildcard symbol versus the recognition result. This would then have to be subtracted from all fragment scores, so that normalised scores are obtained. Furthermore, it is possible to use a fragment specific neutral score, the fragment specific score depending on each fragment. This may be the case if one for example wants to make use of expected scores for fragments and wishes to model the difference between the expected score versus the observed score. The expected score may be the stochastic expected value for a score that was obtained by matching a fragment to a large variety of different speech inputs. For every speech input the fragment had a specific score. The mean value of all the specific scores for one fragment might be the fragment specific score. Accordingly after having calculated the score for each fragment in step 55 and after normalising the scores in step 56 the scores for the different list entries can last but not least be calculated in step 57.

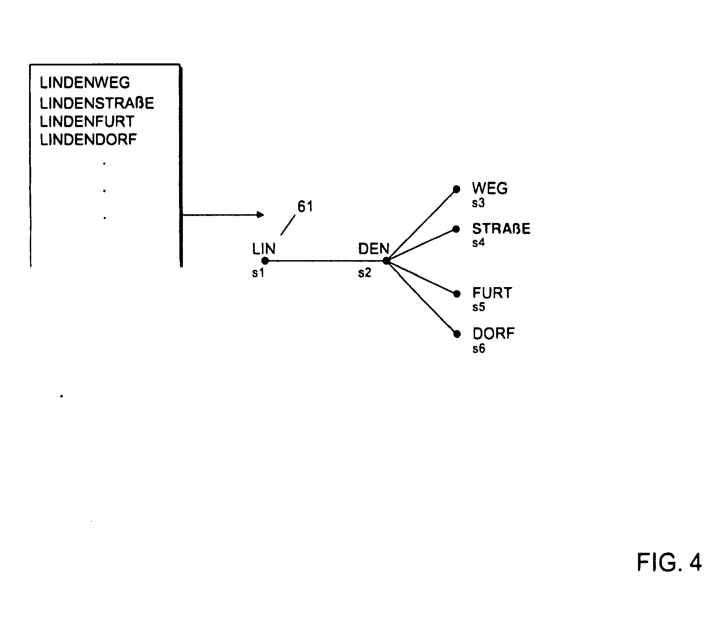

In Fig. 4 an embodiment is shown how an effective organisation of the fragments can be obtained. In the embodiment shown in Fig. 4 the four different list entries *Lindenweg, Lindenstrasse, Lindenfurt, Lindendorf* are shown. For the storing and for the calculation of the score a tree-like structure can be used for efficient storage of the complete list. The list entries have the following fragments Lin|den|furt, Lin|den|dorf, Lin|den|strasse, Lin|den|weg. Then the score of *Lindenfurt* may be the score of *Lin* plus the score of *den* plus the score of *furt* corresponding to the score of *Linden* plus the score of *furt*. As shown in Fig. 4 the fragment 61 "Lin" may have a first score s1 the fragment "den" may have a second score s2 and so on. In order to calculate the score for the four different entries, the score of *lin* and *den* has to added only once, so that for the determination of the scores for the four different list entries only five adding operations have to be carried out. Instead of using a single score s per fragment is also possible to use a position base score for the fragments. This means that the score for fragment A plus fragment B does not correspond to the score of fragment B plus fragment A.

When the fragment based score is known the scores for the complete list entries are known and the list of best matching entries can be calculated by sorting the list based on the scores.

Summarising, as can be seen from the above description, a speech recognition method using fragments instead of the complete list entry can help to optimise the computing power and the time needed to find the correct selected list entry.

## Claims

1. A speech recognition method for selecting, via a speech input, an entry from a list of entries, the method comprising the following steps:
- detecting a speech input,
- recognizing a subword or phoneme sequence of the speech input,
- providing fragments of the list entries, the fragments being based on a subword or phoneme level, the fragments being shorter than the complete list entries,
- comparing the subword or phoneme sequence of the recognised speech input to the fragments of the list entries in order to generate a candidate list of best matching entries based on scores of the comparison result, wherein for generating the candidate list the subword or phoneme sequence of the recognised speech input is compared to said fragments of said entries,
wherein a score is calculated for the fragments when the recognised speech input is compared to the fragments, the score being a measure of how well the recognised speech input fits to one fragment, wherein a score for one list entry is calculated based on the scores of the different fragments that build said list entry.

2. The method according to claim 1, wherein at least one fragment is provided for each entry of the list.

3. The method according to claim 1 or 2, wherein the fragment is accompanied by at least one wildcard, the wildcard representing the part of the list entry not considered in the fragment of the list entry.

4. The method according to any of the preceding claims, wherein a list of fragments is provided containing substantially all different fragments of the list entries, wherein for generating the candidate list, the recognised speech input is compared to the list of fragments.

5. The method according to claim 4, wherein a score is calculated for each fragment of the list of fragments.

6. The method according to any of the preceding claims, wherein a score for one list entry is calculated by adding the scores of the fragments that build said list entry.

7. The method according to any of claims 3 to 6, wherein wildcards are added to one side of the fragment, to the other side of the fragment or to both sides of the fragment.

8. The method according to any of claims 3 to 7, wherein the wildcard is selected in such a way that the wildcard matches substantially uniformly against any recognised speech input.

9. The method according to any of claims 3 to 8, wherein the fragment is accompanied by different wildcards, each wildcard having a different weight when the recognised speech input is compared to the fragment.

10. The method according to any of claims 3 to 9, wherein, when the wildcard is provided only on one side of the fragment, it is determined on which side the wildcard is not provided, wherein the corresponding side of the recognised speech input is determined, wherein the matching of the recognised speech input to the fragment is substantially carried out based on a part of the recognised speech input provided on said corresponding side of the recognised speech input.

11. The method according to any of claims 3 to 10, wherein, when the wildcard is only provided on one side of the fragment, the corresponding side of the recognised speech input is determined, wherein a pruning mechanism is applied to the other side of the recognised speech input.

12. The method according to any of claims 1 to 11, wherein the scores calculated when matching the recognised speech input to the list of fragments are normalised, the normalised scores being added for calculating the score of each list entry.

13. The method according to any of claims 1 to 12, wherein a neutral score is calculated by matching said at least one wildcard versus the recognised speech input, the neutral score being subtracted from all scores calculated for the different fragments.

14. The method according to any of the preceding claims, wherein the fragments are provided in a tree like structure.

15. The method according to claim 14, wherein the scores for the different fragments building the list entry are added on the basis of the tree like structure of the fragments.

16. The method according to any of claims 1 to 15, wherein position based scores are calculated for the fragments, in which the score for a fragment depends on the position of the fragment in the list entry.

17. The method according to any of the preceding claims, wherein the candidate list of best matching entries determined on the basis of fragments of the list entries is used as a basis for a recognition step.

18. The method according to any of the preceding claims, wherein the list entries comprise at least one of the following information: personal names, addresses, city names, street names, points of interest, song titles.

19. The method according to any of the preceding claims, wherein the list of best matching entries is generated by sorting the list entries in dependence on the calculated score, the n list entries having the best score building the candidate list.

20. The method according to any of the preceding claims, wherein for matching the recognised speech input to the fragments of the list entries, a context sensitive Levenshtein algorithm is used.

21. The method according to any of claims 13 to 20, wherein for calculating the neutral score a fragment specific neutral score is calculated, the score for the list entries being calculated on the basis of said fragment specific scores.

22. The method according to any of the preceding claims, wherein the recognised speech input is furthermore compared to at least some of the complete list entries in order to generate the candidate list.

23. The method according to any of the preceding claims, wherein the list entry comprises a combination of a city name and a street name and a fragmentation into fragments is at least carried out between city name and street name.

24. The method according to any of the preceding claims, wherein the fragments of the list entries are selected in such a way that the fragments for one list entry overlap.

25. The method according to any of the preceding claims, wherein the fragments of the list entries are selected in such a way that they cover only a part of the list entry.

26. The method according to any of the preceding claims, wherein the list entries are stored together with wildcards, the wildcards considering the fact that a user's utterance for selecting one entry from said list of entries contains more than the list entry itself.

27. A speech recognition system for selecting, via a speech input, an entry from a list of entries, comprising:
- a data base comprising a list of entries (13) and a list of fragments (15), each fragment representing a part of one list entry, the fragments being based on a subword or phoneme level, the list of fragments (15) comprising the different fragments from the entries of the list of entries (13), the fragments being shorter than the complete list entries,
- a speech recognition module recognizing a speech input and generating a subword or phoneme sequence of the speech input and comparing the recognised subword or phoneme sequence of the speech input to the list of fragments in order to generate a candidate list of best matching entries based on scores of the comparison result, wherein the speech recognition module compares the recognised speech input to said list of fragments in order to generate said candidate list, wherein the speech recognition module calculates a score for the fragments when it compares the recognized speech input to the fragments, the score being a measure of how well the recognized speech input fits to one fragment, wherein the speech recognition unit calculates a score for one list entry based on the scores of the different fragments that build said list entry.

28. The speech recognition system as mentioned in claim 27, wherein it operates according to a method as mentioned in any of claims 1 to 26.

29. Computer program product comprising instructions such that when executed by a processor of a computer system performs the method as mentioned in any of claims 1 to 26.

## Patentansprüche

1. Spracherkennungsverfahren zum Selektieren, mittels einer Spracheingabe, eines Eintrags aus einer Liste von Einträgen, wobei das Verfahren die folgenden Schritte umfasst:
- Detektieren einer Spracheingabe,
- Erkennen einer Teilwort- oder Phonemsequenz der Spracheingabe,
- Bereitstellen von Fragmenten der Listeneinträge, wobei die Fragmente auf einem Teilwort- oder Phonemstufe basieren, wobei die Fragmente kürzer als die kompletten Listeneinträge sind,
- Vergleichen der Teilwort- oder Phonemsequenz der erkannten Spracheingabe mit den Fragmenten der Listeneinträge, um eine Kandidatenliste von am besten übereinstimmenden Einträgen basierend auf Bewertungen des Vergleichsergebnisses zu erzeugen, wobei zum Erzeugen der Kandidatenliste die Teilwort- oder Phonemsequenz der erkannten Spracheingabe mit den Fragmenten der Listeneinträge verglichen wird,
wobei eine Bewertung für die Fragmente berechnet wird, wenn die erkannte Spracheingabe mit den Fragmenten verglichen wird, wobei die Bewertung ein Maß dafür ist, wie gut die erkannte Spracheingabe auf ein Fragment passt, wobei eine Bewertung für einen Listeneintrag, basierend auf den Bewertungen der verschiedenen Fragmente, die diesen Listeneintrag bilden, berechnet wird.

2. Verfahren gemäß Anspruch 1, wobei mindestens ein Fragment für jeden Eintrag der Liste bereitgestellt wird.

3. Verfahren gemäß Anspruch 1 oder 2, wobei das Fragment von mindestens einem Platzhalter begleitet wird, wobei der Platzhalter den Teil des Listeneintrags repräsentiert, der in dem Fragment des Listeneintrags nicht berücksichtigt wird.

4. Verfahren gemäß einem der voranstehenden Ansprüche, wobei eine Liste von Fragmenten bereitgestellt wird, die im Wesentlichen alle verschiedenen Fragmente der Listeneinträge enthält, wobei zum Erzeugen der Kandidatenliste die erkannte Spracheingabe mit der Liste von Fragmenten verglichen wird.

5. Verfahren gemäß Anspruch 4, wobei eine Bewertung für jedes Fragment der Liste von Fragmenten berechnet wird.

6. Verfahren gemäß einem der voranstehenden Ansprüche, wobei eine Bewertung für einen Listeneintrag durch Addieren der Bewertungen der Fragmente, die diesen Listeneintrag bilden, berechnet wird.

7. Verfahren gemäß einem der Ansprüche 3 bis 6, wobei Platzhalter zu einer Seite des Fragments, zu der anderen Seite des Fragments oder zu beiden Seiten des Fragments hinzugefügt werden.

8. Verfahren gemäß einem der Ansprüche 3 bis 7, wobei der Platzhalter auf eine solche Art und Weise selektiert wird, dass der Platzhalter im Wesentlichen gleichartig auf jede erkannte Spracheingabe passt.

9. Verfahren gemäß einem der Ansprüche 3 bis 8, wobei das Fragment von verschiedenen Platzhaltern begleitet wird, wobei jeder Platzhalter ein unterschiedliches Gewicht hat, wenn die erkannte Spracheingabe mit dem Fragment verglichen wird.

10. Verfahren gemäß einem der Ansprüche 3 bis 9, wobei, wenn der Platzhalter nur auf einer Seite des Fragments bereitgestellt wird, bestimmt wird, auf welcher Seite der Platzhalter nicht bereitgestellt wird, wobei die korrespondierende Seite der erkannten Spracheingabe bestimmt wird, wobei das Vergleichen der erkannten Spracheingabe mit dem Fragment im Wesentlichen basierend auf einem Teil der erkannten Spracheingabe durchgeführt wird, der auf der korrespondierenden Seite der erkannten Spracheingabe bereitgestellt ist.

11. Verfahren gemäß einem der Ansprüche 3 bis 10, wobei, wenn der Platzhalter nur auf einer Seite des Fragments bereitgestellt ist, die korrespondierende Seite der erkannten Spracheingabe bestimmt wird, wobei ein Verkürzungsmechanismus auf der anderen Seite der erkannten Spracheingabe angewendet wird.

12. Verfahren gemäß einem der Ansprüche 1 bis 11, wobei die Bewertungen, die beim Vergleichen der erkannten Spracheingabe mit der Liste von Fragmenten berechnet werden, normalisiert werden, wobei die normalisierten Bewertungen zum Berechnen der Bewertung eines jeden Listeneintrags addiert werden.

13. Verfahren gemäß einem der Ansprüche 1 bis 12, wobei eine neutrale Bewertung durch Vergleichen des mindestens einen Platzhalters gegen die erkannte Spracheingabe berechnet wird, wobei die neutrale Bewertung von allen Bewertungen, die für die verschiedenen Fragmente berechnet werden, abgezogen wird.

14. Verfahren gemäße einem der voranstehenden Ansprüche, wobei die Fragmente in einer baumartigen Struktur bereitgestellt werden.

15. Verfahren gemäß Anspruch 14, wobei die Bewertungen für die verschiedenen Fragmente, die den Listeneintrag bilden, basierend auf der baumartigen Struktur der Fragmente addiert werden.

16. Verfahren gemäß einem der Ansprüche 1 bis 15, wobei positionsbasierte Bewertungen für die Fragmente berechnet werden, bei denen die Bewertung für ein Fragment von der Position des Fragments in dem Listeneintrag abhängt.

17. Verfahren gemäß einem der voranstehenden Ansprüche, wobei die Kandidatenliste der am besten übereinstimmenden Einträge, die auf der Basis der Fragmente der Listeneinträge bestimmt wird, als Basis für einen Erkennungsschritt verwendet wird.

18. Verfahren gemäß einem der voranstehenden Ansprüche, wobei die Listeneinträge mindestens eine der folgenden Informationen umfassen: Personennamen, Adressen, Stadtnamen, Straßennamen, Punkte von Relevanz, Liedtitel.

19. Verfahren gemäß einem der voranstehenden Ansprüche, wobei die Liste der am besten übereinstimmenden Einträge durch Sortieren der Listeneinträge in Abhängigkeit der berechneten Bewertung erzeugt wird, wobei die n Listeneinträge, die die beste Bewertung haben, die Kandidatenliste bilden.

20. Verfahren gemäß einem der voranstehenden Ansprüche, wobei zum Vergleichen der erkannten Spracheingabe mit den Fragmenten der Listeneinträge ein Kontext sensitiver Levenshtein-Algorithmus verwendet wird.

21. Verfahren gemäß einem der Ansprüche 13 bis 20, wobei zum Berechnen der neutralen Bewertung eine Fragment-spezifische neutrale Bewertung berechnet wird, wobei die Bewertung für die Listeneinträge basierend auf den Fragmenten-spezifischen Bewertungen berechnet wird.

22. Verfahren gemäß einem der voranstehenden Ansprüche, wobei die erkannte Spracheingabe weiterhin mit mindestens einigen der kompletten Listeneinträge verglichen wird, um die Kandidatenliste zu erzeugen.

23. Verfahren gemäß einem der voranstehenden Ansprüche, wobei die Listeneinträge eine Kombination eines Stadtnamens und eines Straßennamens umfassen und eine Fragmentierung in Fragmente zumindest zwischen Stadtname und Straßenname durchgeführt wird.

24. Verfahren gemäß einem der voranstehenden Ansprüche, wobei die Fragmente der Listeneinträge auf eine solche Art und Weise selektiert werden, dass die Fragmente für einen Listeneintrag überlappen.

25. Verfahren gemäß einem der voranstehenden Ansprüche, wobei die Fragmente der Listeneinträge auf eine solche Art und Weise selektiert werden, dass sie nur einen Teil des Listeneintrags abdecken.

26. Verfahren gemäß einem der voranstehenden Ansprüche, wobei die Listeneinträge zusammen mit Platzhaltern gespeichert werden, wobei die Platzhalter die Tatsache berücksichtigen, dass eine Äußerung eines Benutzers zum Selektieren eines Eintrags von der Liste von Einträgen mehr als den Listeneintrag selbst beinhaltet.

27. Spracherkennungssystem zum Selektieren, mittels einer Spracheingabe, eines Eintrags aus einer Liste von Einträgen, das umfasst:
- eine Datenbank, die eine Liste von Einträgen (13) und eine Liste von Fragmenten (15) umfasst, wobei jedes Fragment einen Teil eines Listeneintrags repräsentiert, wobei die Fragmente auf einer Teilwort- oder Phonemstufe basieren, wobei die Liste von Fragmenten (15) die verschiedenen Fragmente aus den Einträgen der Liste von Einträgen (13) umfasst, wobei die Fragmente kürzer als die kompletten Listeneinträge sind,
- ein Spracherkennungsmodul, welches eine Spracheingabe erkennt und eine Teilwort- oder Phonemsequenz der Spracheingabe erzeugt und die erkannte Teilwort- oder Phonemsequenz der Spracheingabe mit der Liste der Fragmente vergleicht, um eine Kandidatenliste der am besten übereinstimmenden Einträge basierend auf Bewertungen des Vergleichsergebnisses zu erzeugen, wobei das Spracherkennungsmodul die erkannte Spracheingabe mit der Liste der Fragmente vergleicht, um die Kandidatenliste zu erzeugen, wobei das Spracherkennungsmodul eine Bewertung für die Fragmente berechnet, wenn es die erkannte Spracheingabe mit den Fragmenten vergleicht, wobei die Bewertung ein Maß dafür ist, wie gut die erkannte Spracheingabe auf ein Fragment passt, wobei die Spracherkennungseinheit eine Bewertung für einen Listeneintrag basierend auf den Bewertungen der verschiedenen Fragmente, die diesen Listeintrag bilden, berechnet.

28. Spracherkennungssystem wie in Anspruch 7 genannt, wobei dieses gemäß eines Verfahrens, wie es in einem der Ansprüche 1 bis 26 genannt ist, betrieben wird.

29. Computerprogrammprodukt, das Befehle umfasst, sodass, wenn es von einem Prozessor eines Computersystems ausgeführt wird, das Verfahren, wie es in einem der Ansprüche 1 bis 26 genannt ist, ausführt.

## Revendications

1. Procédé de reconnaissance vocale destiné à sélectionner, par l'intermédiaire d'une entrée vocale, une entrée à partir d'une liste d'entrées, le procédé comprenant les étapes ci-dessous consistant à :
- détecter une entrée vocale ;
- reconnaître une séquence de phonèmes ou de sous-mots de l'entrée vocale ;
- fournir des fragments des entrées de liste, les fragments étant basés sur un niveau de sous-mots ou de phonèmes, les fragments étant plus courts que les entrées de liste complètes ;
- comparer la séquence de phonèmes ou de sous-mots de l'entrée vocale reconnue aux fragments des entrées de liste, en vue de générer une liste candidate d'entrées présentant la meilleure correspondance, sur la base des scores du résultat de comparaison, dans lequel, en vue de générer la liste candidate, la séquence de phonèmes ou de sous-mots de l'entrée vocale reconnue est comparée auxdits fragments desdites entrées ;
dans lequel un score est calculé pour les fragments lorsque l'entrée vocale reconnue est comparée aux fragments, le score correspondant à une mesure de la façon dont l'entrée vocale reconnue correspond à un fragment, dans lequel un score pour une entrée de liste est calculé sur la base des scores des différents fragments qui composent ladite entrée de liste.

2. Procédé selon la revendication 1, dans lequel au moins un fragment est fourni pour chaque entrée de la liste.

3. Procédé selon la revendication 1 ou 2, dans lequel le fragment est accompagné d'au moins un caractère de remplacement ou métacaractère, le caractère de remplacement représentant la partie de l'entrée de liste non prise en compte dans le fragment de l'entrée de liste.

4. Procédé selon l'une quelconque des revendications précédentes, dans lequel une liste de fragments est fournie qui contient sensiblement la totalité des différents fragments des entrées de liste, dans lequel, en vue de générer la liste candidate, l'entrée vocale reconnue est comparée à la liste de fragments.

5. Procédé selon la revendication 4, dans lequel un score est calculé pour chaque fragment de la liste de fragments.

6. Procédé selon l'une quelconque des revendications précédentes, dans lequel un score pour une entrée de liste est calculé en ajoutant les scores des fragments qui composent ladite entrée de liste.

7. Procédé selon l'une quelconque des revendications 3 à 6, dans lequel des caractères de remplacement sont ajoutés à un côté du fragment, à l'autre côté du fragment, ou aux deux côtés du fragment.

8. Procédé selon l'une quelconque des revendications 3 à 7, dans lequel le caractère de remplacement est sélectionné de sorte que le caractère de remplacement correspond sensiblement uniformément à une quelconque entrée vocale reconnue.

9. Procédé selon l'une quelconque des revendications 3 à 8, dans lequel le fragment est accompagné de différents caractères de remplacement, chaque caractère de remplacement présentant une pondération distincte lorsque l'entrée vocale reconnue est comparée au fragment.

10. Procédé selon l'une quelconque des revendications 3 à 9, dans lequel, lorsque le caractère de remplacement n'est fourni que sur un côté du fragment, il est déterminé sur quel côté le caractère de remplacement n'est pas fourni, dans lequel le côté correspondant de l'entrée vocale reconnue est déterminé, dans lequel la mise en correspondance de l'entrée vocale reconnue sur le fragment est sensiblement mise en oeuvre sur la base d'une partie de l'entrée vocale reconnue fournie sur ledit côté correspondant de l'entrée vocale reconnue.

11. Procédé selon l'une quelconque des revendications 3 à 10, dans lequel, lorsque le caractère de remplacement n'est fourni que sur un côté du fragment, le côté correspondant de l'entrée vocale reconnue est déterminé, dans lequel un mécanisme d'élagage est appliqué à l'autre côté de l'entrée vocale reconnue.

12. Procédé selon l'une quelconque des revendications 1 à 11, dans lequel les scores calculés lors de la mise en correspondance de l'entrée vocale reconnue avec la liste de fragments sont normalisés, les scores normalisés étant ajoutés en vue de calculer le score de chaque entrée de liste.

13. Procédé selon l'une quelconque des revendications 1 à 12, dans lequel un score neutre est calculé en mettant en correspondance ledit au moins un caractère de remplacement avec l'entrée vocale reconnue, le score neutre étant soustrait de la totalité des scores calculés pour les différents fragments.

14. Procédé selon l'une quelconque des revendications précédentes, dans lequel les fragments sont fournis dans une structure de type arborescente.

15. Procédé selon la revendication 14, dans lequel les scores pour les différents fragments composant l'entrée de liste sont ajoutés sur la base de la structure de type arborescente des fragments.

16. Procédé selon l'une quelconque des revendications 1 à 15, dans lequel des scores basés sur les positions sont calculés pour les fragments, dans lequel le score pour un fragment dépend de la position du fragment dans l'entrée de liste.

17. Procédé selon l'une quelconque des revendications précédentes, dans lequel la liste candidate d'entrées présentant la meilleure correspondance déterminées sur la base de fragments des entrées de liste est utilisée comme base dans la cadre d'une étape de reconnaissance.

18. Procédé selon l'une quelconque des revendications précédentes, dans lequel les entrées de liste comprennent au moins l'une des informations suivantes :
des noms de personnes, des adresses, des noms de ville, des noms de rues, des points d'intérêt et des titres de chansons.

19. Procédé selon l'une quelconque des revendications précédentes, dans lequel la liste d'entrées présentant la meilleure correspondance est générée en triant les entrées de liste en fonction du score calculé, les n entrées de liste ayant le meilleur score composant la liste candidate.

20. Procédé selon l'une quelconque des revendications précédentes, dans lequel, en vue de mettre en correspondance l'entrée vocale reconnue avec les fragments des entrées de liste, un algorithme de Levenshtein contextuel est utilisé.

21. Procédé selon l'une quelconque des revendications 13 à 20, dans lequel, en vue de calculer le score neutre, un score neutre spécifique aux fragments est calculé, le score pour les entrées de liste étant calculé sur la base desdits scores spécifiques aux fragments.

22. Procédé selon l'une quelconque des revendications précédentes, dans lequel l'entrée vocale reconnue est en outre comparée à au moins certaines des entrées de liste complètes en vue de générer la liste candidate.

23. Procédé selon l'une quelconque des revendications précédentes, dans lequel l'entrée de liste comprend une combinaison d'un nom de ville et d'un nom de rue, et une fragmentation en fragments est au moins mise en oeuvre entre le nom de ville et le nom de rue.

24. Procédé selon l'une quelconque des revendications précédentes, dans lequel les fragments des entrées de liste sont sélectionnés de sorte que les fragments pour une entrée de liste se chevauchent.

25. Procédé selon l'une quelconque des revendications précédentes, dans lequel les fragments des entrées de liste sont sélectionnés de sorte qu'ils ne couvrent qu'une partie de l'entrée de liste.

26. Procédé selon l'une quelconque des revendications précédentes, dans lequel les entrées de liste sont stockées conjointement avec des caractères de remplacement, les caractères de remplacement tenant compte du fait que l'énoncé d'un utilisateur pour sélectionner une entrée à partir de ladite liste d'entrées contient plus que l'entrée de liste elle-même.

27. Système de reconnaissance vocale destiné à sélectionner, par l'intermédiaire d'une entrée vocale, une entrée à partir d'une liste d'entrées, comprenant :
- une base de données comprenant une liste d'entrées (13) et une liste de fragments (15), chaque fragment représentant une partie d'une entrée de liste, les fragments étant basés sur un niveau de sous-mots ou de phonèmes, la liste de fragments (15) comprenant les différents fragments en provenance des entrées de la liste d'entrées (13), les fragments étant plus courts que les entrées de liste complètes ;
- un module de reconnaissance vocale reconnaissant une entrée vocale et générant une séquence de phonèmes ou de sous-mots de l'entrée vocale, et comparant la séquence de phonèmes ou de sous-mots reconnue de l'entrée vocale à la liste de fragments, en vue de générer une liste candidate d'entrées présentant la meilleure correspondance sur la base des scores du résultat de comparaison, dans lequel le module de reconnaissance vocale compare l'entrée vocale reconnue à ladite liste de fragments, en vue de générer ladite liste candidate, dans lequel le module de reconnaissance vocale calcule un score pour les fragments lorsqu'il compare l'entrée vocale reconnue aux fragments, le score correspondant à une mesure de la façon dont l'entrée vocale reconnue correspond à un fragment, dans lequel l'unité de reconnaissance vocale calcule un score pour une entrée de liste sur la base des scores des différents fragments qui composent ladite entrée de liste.

28. Système de reconnaissance vocale selon la revendication 27, **caractérisé en ce qu'**il fonctionne conformément à un procédé selon l'une quelconque des revendications 1 à 26.

29. Produit-programme informatique comprenant des instructions, de sorte que, lorsqu'elles sont exécutées par un processeur d'un système informatique, il met en oeuvre le procédé selon l'une quelconque des revendications 1 à 26.
